# DEMANDE DE BREVET EUROPEEN

(11) **EP 1 148 022 A1**
(43) Date de publication de la demande: **24.10.2001**
(21) Numéro de dépôt: 01420094.3
(22) Date de dépôt: 19.04.2001
(51) Int. Cl.: B66F 11/04, B60K 1/04, H01M 2/10

(54) **Châssis pour nacelle élévatrice et nacelle élévatrice à ciseaux équipée d'un tel châssis**

(30) Priorité: 20.04.2000 FR 0005116
(71) Demandeur: Pinguely-Haulotte, 42152 L'Horme (FR)
(72) Inventeur: Beji, Salah, 38200 Vienne (FR)
(74) Mandataire: Myon, Gérard Jean-Pierre

(57) **Abrégé**

La nacelle élévatrice à ciseaux de l'invention est équipée d'un moteur électrique alimenté en courant à partir d'au moins une batterie d'accumulateurs (13) et comprend un châssis (10), une plate-forme et un jeu de bras articulés permettant de soulever plus ou moins cette plate-forme par rapport à ce châssis. Le châssis définit un logement (15) de réception d'au moins une batterie d'accumulateurs (13) et des zones (16) de montage de roues de la nacelle. Le logement est ménagé entre deux zones de montage (16) de roues (5b) disposées de part et d'autre d'un axe longitudinal (X-X') médian du châssis et permet de recevoir un tiroir (14) supportant les batteries (13). Ce tiroir est déplaçable en translation (F₄) parallèlement à l'axe longitudinal (X-X') du châssis.

L'invention permet d'abaisser la garde au sol de la nacelle sans risque de coincement de celle-ci lorsqu'elle évolue sur un sol irrégulier, ce qui permet de baisser sa hauteur totale en position basse de la plate-forme de la nacelle. L'invention permet un accès aisé aux batteries (13), notamment pour leur maintenance.

## Description

La présente invention a trait à un châssis pour une nacelle élévatrice et à une nacelle élévatrice à ciseaux équipée d'un tel châssis.

Il est connu d'équiper une nacelle avec un moteur électrique ou hydraulique alimenté par une ou plusieurs batteries d'accumulateurs. Dans le cas d'une nacelle dite "à ciseaux", un châssis supporte un jeu de barres articulées entre elles qui supportent elles-mêmes une plate-forme, le positionnement des barres les unes par rapport aux autres permettant de commander l'élévation de la plate-forme au-dessus du châssis. D'après les normes de sécurité en vigueur en Europe, une telle plate-forme doit être équipée d'une rambarde s'étendant sur une hauteur d'au moins 1,10 mètre au-dessus du plancher de cette plate-forme. Par ailleurs, en France et dans la plupart des pays d'Europe, la hauteur des portes intérieures des bâtiments est généralement d'environ 2 mètres, ce qui impose la hauteur maximale d'une nacelle en position basse de sa plate-forme, pour permettre le déplacement d'une telle nacelle à l'intérieur d'un bâtiment.

Dans les nacelles connues, la hauteur de l'ensemble formé du châssis et des bras ou barres de ciseaux en configuration "basse" ou "repliée" est supérieure à 90 cm, de sorte qu'il n'est pas possible de déplacer ces nacelles à l'intérieur de la plupart des bâtiments commerciaux ou industriels.

Il est connu, par exemple de FR-A-2 732 001, de disposer les batteries entre les roues motrices d'une nacelle pour former contre-poids. En configuration basse de la nacelle, celle-ci reste relativement élevée. La mise en place et la maintenance des batteries sont délicates car leur accès est difficile. En outre, compte tenu de la structure à bras articulés utilisée, le logement disponible pour les batteries est exigu.

C'est à ces inconvénient qu'entend plus particulièrement remédier l'invention en proposant une nouvelle structure de châssis autorisant une grande compacité de la nacelle en position basse de la plate-forme et un accès aisé aux batteries.

Dans cet esprit, l'invention concerne un châssis pour une nacelle élévatrice qui définit un logement de réception d'au moins une batterie d'accumulateurs et des zones de montage de roues de la nacelle. Ce logement, ménagé entre deux zones de montage de roues disposées de part et d'autre d'un axe longitudinal médian de ce châssis, est prévu pour recevoir au moins un tiroir supportant au moins une batterie d'accumulateurs, ce tiroir étant déplaçable, entre une position engagée dans le logement et une position dégagée par rapport à celui-ci, par une translation parallèle à l'axe longitudinal du châssis.

En d'autres termes, le logement de réception des batteries d'accumulateurs est disposé entre deux roues de la nacelle, au niveau d'un essieu virtuel de la nacelle. Ceci permet d'abaisser la garde au sol de la nacelle au niveau de ce logement, ce qui est compatible avec le déplacement d'une nacelle sur la plupart des terrains car les roues, qui sont disposées de part et d'autre de ce logement, permettent de dégager la nacelle par rapport à un éventuel obstacle sur lequel elle roule. Ceci correspond à une différence essentielle par rapport au cas où un logement de batterie de hauteur fixée serait prévu entre les roues avant et arrière de la nacelle, auquel cas la garde au sol serait abaissée entre ces roues, ce qui présenterait un danger de coincement de la nacelle par immobilisation du fond de ce logement contre un obstacle de part et d'autre duquel se trouveraient ces roues. L'invention évite cette situation car les roues disposées de part et d'autre du logement passent sur un obstacle sensiblement en même temps que ce logement. En particulier, l'invention permet d'éviter que la partie inférieure du châssis d'une nacelle ne vienne au contact du sol lors des mouvements de chargement et de déchargement d'une telle nacelle sur un engin de transport. Le tiroir, accessible par l'avant ou par l'arrière de la nacelle, permet de positionner efficacement et de façon précise la ou les batteries d'accumulateurs lors de leur mise en place, de leur retrait ou d'opérations de maintenance des batteries, telles que leur charge ou leur remplissage.

L'invention permet donc d'abaisser la garde au sol de la nacelle sans risque de coincement de celle-ci lorsqu'elle évolue sur un sol irrégulier, ce qui permet de baisser sa hauteur totale en position basse de la plate-forme, alors que l'accès aux batteries demeure aisé.

L'invention concerne également une nacelle élévatrice à ciseaux comprenant un châssis tel que précédemment décrit.

Selon des aspects avantageux mais non obligatoires de l'invention, cette nacelle incorpore une ou plusieurs des caractéristiques suivantes :
- Des moyens de verrouillage du tiroir en position engagée dans le logement peuvent être prévus. Ils peuvent comprendre un organe porté par le tiroir et chargé élastiquement vers une position d'engagement avec une butée prévue sur le châssis. Dans ce cas, il peut être prévu des moyens de blocage de l'organe de verrouillage dans une position dégagée par rapport à cette butée, ce qui autorise les mouvements de translation du tiroir sans interférence avec la butée.
- Le tiroir porte, sur une face frontale ou externe, des marches ou barreaux d'accès à la plate-forme.
- En position basse de la plate-forme, son plancher est à une hauteur d'au plus d'environ 90 cm par rapport à la surface sur laquelle repose la nacelle. Grâce à cette caractéristique, la nacelle, dont la plate-forme est équipée d'une rambarde de hauteur égale à environ 1,10 mètre, a une hauteur totale inférieure ou égale à 2 mètres en position basse, ce qui autorise son passage à travers des portes standard.
- La garde au sol de la nacelle au niveau du logement est inférieure ou égale à sa garde au sol au niveau d'une partie centrale du châssis définie entre deux trains de roues disposées respectivement à l'avant et à l'arrière de la nacelle.
- Le plancher de la plate-forme est télescopique, selon une direction globalement horizontale lorsque la nacelle repose sur un sol plat, alors que la plate-forme est équipée d'une rembarde adaptée aux changements de dimensions du plancher.

L'invention sera mieux comprise et d'autres avantages de celle-ci apparaîtront plus clairement à la lumière de la description qui va suivre d'un mode de réalisation d'un châssis et d'une nacelle conformes à son principe, donnée uniquement à titre d'exemple et faite en référence aux dessins annexés dans lesquels :
- la figure 1 est une vue de côté d'une nacelle à ciseaux conforme à l'invention avec une plate-forme en position basse ;
- la figure 2 est une vue analogue à la figure 1 alors que la plate-forme est en position haute ;
- la figure 3 est une vue en perspective de la nacelle dans la configuration de la figure 1, sa plate-forme étant omise ;
- la figure 4 est une vue en perspective éclatée à plus grande échelle d'une partie du châssis de la nacelle et de certains de ses équipements et

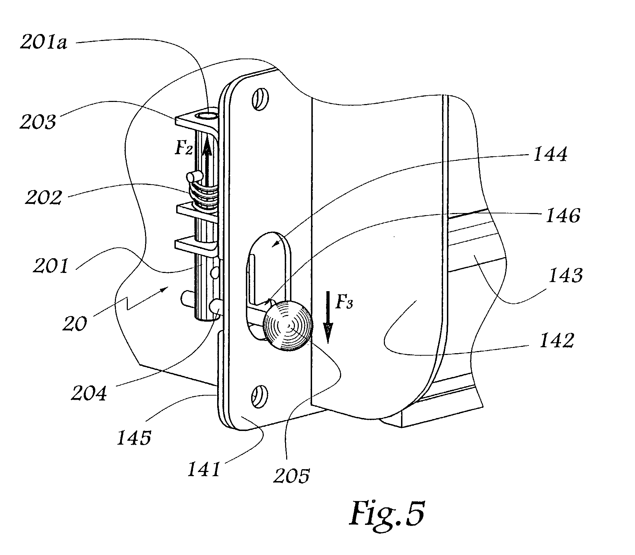

- la figure 5 est une vue à plus grande échelle du détail V à la figure 4.

La nacelle 1 représentée sur les figures comprend une plate-forme 2 sur laquelle peut se tenir un opérateur lorsque des travaux en hauteur doivent être effectués.

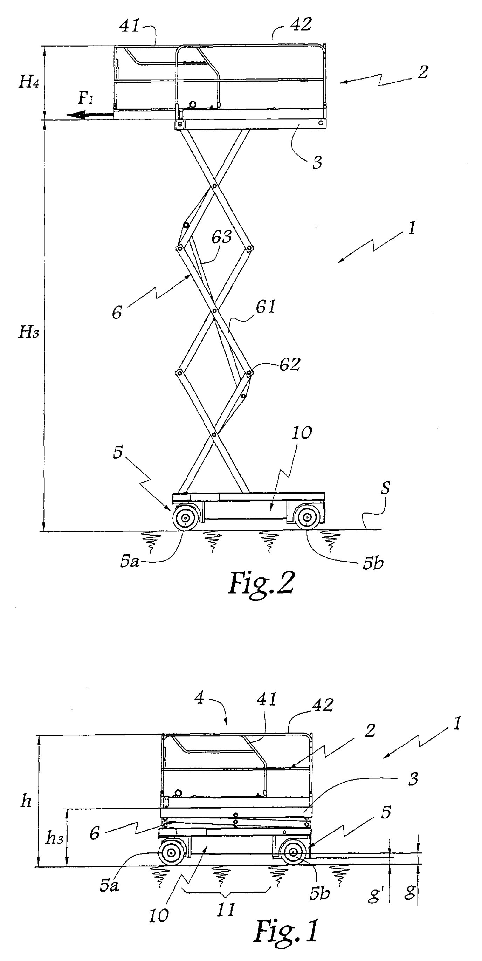

Cette plate-forme comprend un plancher 3 surmonté d'une rambarde 4. Le plancher 3 est télescopique dans une direction globalement horizontale représentée par la flèche F₁ aux figures 1 et 2, ce qui permet d'étendre sa surface utile, comme cela ressort de la comparaison de ces figures. La rambarde 4 est configurée en plusieurs éléments 41, 42 permettant d'assurer une protection efficace d'un utilisateur dans toutes les configurations du plancher 3. On note H₄ la hauteur de la rambarde 4 au-dessus du plancher 3. Conformément aux normes européennes en vigueur, cette hauteur H₄ est au minimum égale à 1,10 mètre.

La nacelle 1 comprend également un châssis 10 supporté par quatre roues 5 et sur lequel est montée une structure 6 communément dénommée "ciseaux" et formée de barres 61, articulées entre elles autour de pivots 62 et commandées grâce à des moyens mécaniques 63. Bien entendu, la structure en ciseaux 6 pourrait également être commandée par des vérins électriques ou hydrauliques.

Par une commande adéquate de la structure 6, il est possible d'élever la plate-forme 2 au-dessus du châssis 10 et de la surface S du sol au point que la hauteur H₃ du plancher 3 au-dessus du sol est supérieure à 8 mètres, ce qui permet des interventions en partie supérieure de bâtiments commerciaux ou industriels.

Pour une utilisation sans encombre à l'intérieur d'un bâtiment et conformément à l'invention, la hauteur totale h de la nacelle dans la position de la figure 1 doit être inférieure ou égale à 2 mètres. Compte tenu de la hauteur H₄ de la rambarde, la hauteur totale h₃, par rapport à la surface S du plancher 3, de la structure 6 en configuration pliée représentée à la figure 1 et du châssis 10 équipé de ses roues 5 est inférieure ou égale à 90 cm.

La garde au sol g du châssis 10 dans sa partie centrale 11, c'est-à-dire la partie définie entre deux trains de roues 5, ne peut pas être abaissée de façon trop importante, sans diminuer sensiblement la facilité d'utilisation de la nacelle qui risquerait alors d'être coincée lorsqu'elle évolue sur un sol irrégulier.

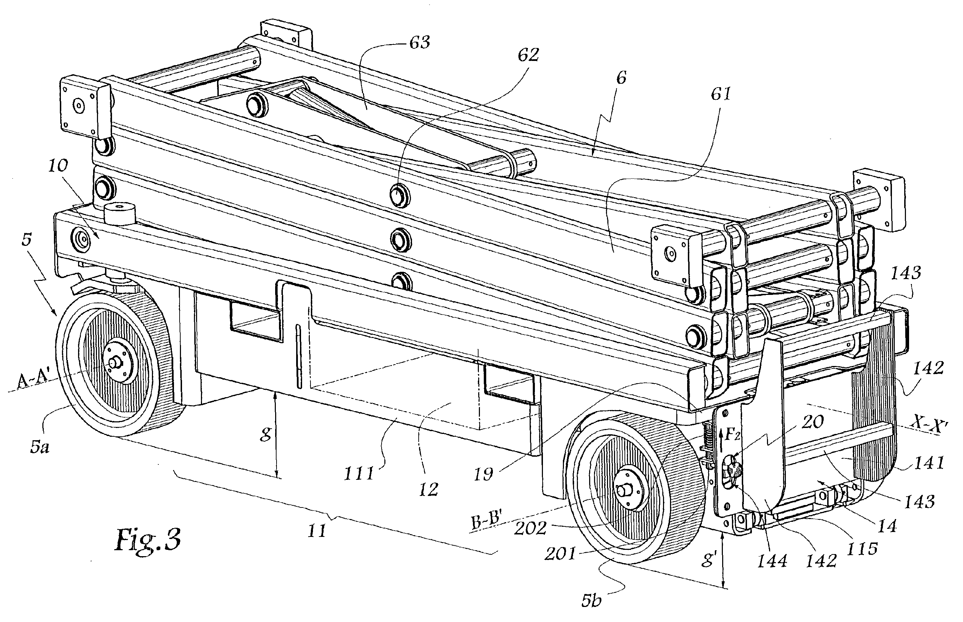

Le châssis 10 incorpore les éléments de motorisation de la nacelle et, plus particulièrement, un moteur électrique 12 représenté uniquement en traits mixtes à la figure 3 et logé dans la partie centrale 11 du châssis 10. Le moteur 12 permet de commander deux roues motrices 5a représentées sur la gauche des figures 1 à 3.

Conformément à l'invention, ce moteur 12 est alimenté par des batteries d'accumulateurs 13 disposées dans un tiroir 14 reçu dans un logement 15 ménagé entre des roues suiveuses 5b de la nacelle.

Plus précisément, on définit un axe longitudinal médian X-X' du châssis 10. Le châssis 10 forme quatre zones 16 de réception des roues 5, ces quatre zones 16 étant réparties en deux zones avant alignées sur un axe A-A' perpendiculaire à l'axe X-X' et deux zones arrière alignées sur un axe B-B' également perpendiculaire à l'axe X-X'. Les zones avant sont disposées de part et d'autre de l'axe X-X', de même que les zones arrière. Les axes A-A' et B-B' sont les axes géométriques des essieux avant et arrière de la nacelle.

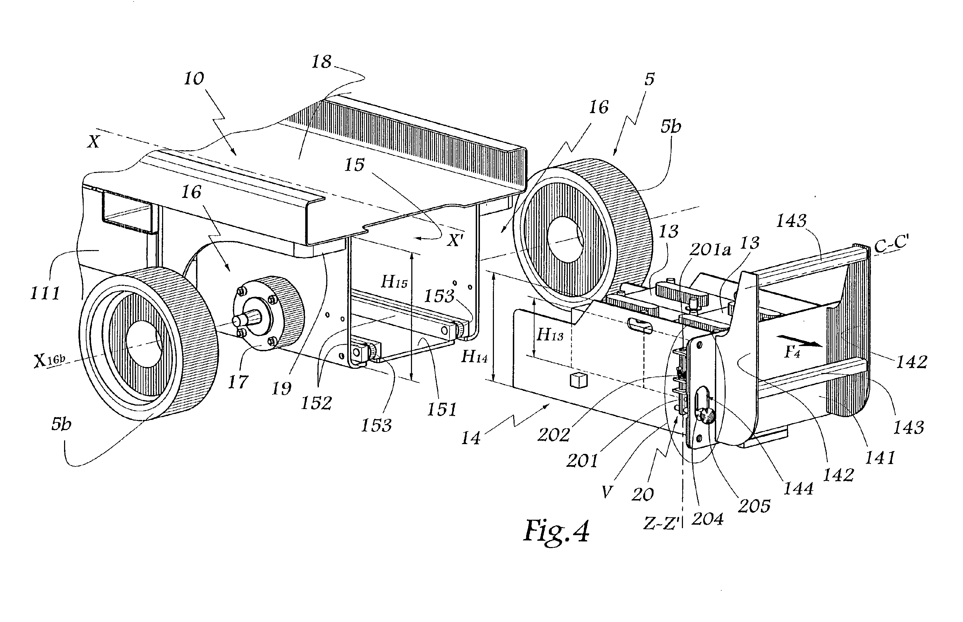

Comme il ressort plus clairement de la figure 4, chaque zone 16 comprend un moyeu-frein 17 sur lequel est montée la roue 5a ou 5b correspondante.

Compte tenu de la hauteur H₁₃ des batteries 13, la hauteur H₁₄ du tiroir 14 est relativement importante, de sorte que la hauteur H₁₅ du logement 15, qui doit être supérieure à la hauteur H₁₄, est également importante.

Afin d'éviter que la face supérieure 18 du châssis 10 ne soit située à une hauteur trop importante par rapport à la surface S du sol et de conserver la valeur de h₃ inférieure ou égale à 90 cm, la base 151 du logement 15 est abaissée par rapport à la base 111 de la partie 11, de telle sorte que la garde au sol g' de la nacelle 1 au niveau des roues 5b et du logement 15 est inférieure à la garde au sol g. En pratique, la garde au sol g' peut avoir une valeur de l'ordre de 80mm alors que la garde au sol g a une valeur de l'ordre de 130mm. Ces valeurs peuvent varier de plus ou moins 30 mm.

La valeur relativement faible de la garde au sol g' au niveau des roues 5b, n'est pas réellement gênante dans la mesure où ces roues maintiennent en permanence l'écart entre la base 151 et la surface S du sol, y compris lorsqu'elles roulent sur un obstacle, ce qui ne serait pas le cas si la garde au sol était abaissée au niveau de la partie centrale 11 du châssis 10.

En outre, la nacelle de l'invention peut gravir une pente à 25% suivie d'une surface plane, sans que la base 111 de sa partie centrale 11 ne vienne se coincer contre le sol dans la zone de transition entre la pente et la surface plane car la garde au sol g est suffisante.

Le logement 15 est équipé de deux glissières 152 de réception et de guidage du tiroir 14, ces glissières étant pourvues de galets 153 facilitant la mise en place du tiroir 14 dans le logement 15.

La face frontale 141 du tiroir 14 est équipée de deux supports 142 entre lesquels sont disposés deux barreaux 143 s'étendant horizontalement selon une direction C-C' globalement perpendiculaire à l'axe X-X' et parallèle à l'axe B-B'. Ces barreaux 143 forment des marches sur lesquelles un utilisateur peut poser les pieds pour accéder à la plate-forme 2 en position basse.

Comme il ressort de la comparaison des figures 3 et 4, le tiroir est mobile en translation parallèlement à l'axe X-X' , ce qui permet de mettre en place les batteries 13 pour utilisation et d'accéder à ces batteries pour les opérations de maintenance et, éventuellement, de charge.

Un verrou 20 est monté sur le tiroir 14 afin d'immobiliser celui-ci en position engagée dans le logement 15. Ce verrou comprend une tige 201 s'étendant selon une direction Z-Z' essentiellement verticale, c'est-à-dire perpendiculaire aux directions des axes X-X' et B-B' et chargée élastiquement vers le haut grâce à un ressort 202 exerçant un effort F₂ vertical et dirigé vers le haut. La tige 201 est guidée en translation grâce à des pattes 203 fixées sur le côté intérieur de la face frontale 141 du tiroir 14. La tige 201 est reliée à un levier de manoeuvre 204 pourvu d'une poignée 205 sur laquelle un utilisateur peut exercer un effort F₃ sensiblement opposé à l'effort F₂. Dans la configuration de la figure 3, l'extrémité supérieure 201a de la tige 201 vient en engagement derrière un retour 19 du châssis 10, ce retour formant une surface verticale s'étendant vers le bas à partir de la face 18. La coopération des éléments 201 et 19 évite une sortie accidentelle du tiroir 14 par rapport au logement 15.

Lorsqu'il est nécessaire d'avoir accès aux batteries 13, il suffit à un opérateur d'exercer l'effort F₃ dirigé vers le bas sur la poignée 205 pour dégager l'extrémité 201a par rapport au retour 19 et permettre ainsi l'extraction du tiroir 14 dans le sens de la flèche F₄ à la figure 4.

Le levier 204 traverse une lumière oblongue 144 ménagée dans la face frontale 141 du tiroir 14, le caractère oblong de cette lumière permettant les mouvements du levier 204 dans le sens des efforts F₂ et F₃.

La tige 201 peut être verrouillée en position basse, c'est-à-dire dans une position où elle n'interfère pas avec le retour 19, tout au long de la manoeuvre du tiroir 14 dans le sens de la flèche F₄ et dans le sens opposé. Pour ce faire, la face frontale 141 du tiroir 14 est doublée, au niveau de la lumière 144, d'une plaque 145 dans laquelle est prévue une entaille 146 en forme de L dont la plus grande branche est parallèle à la tige 201 alors que sa plus petite branche constitue une zone de blocage du levier 204 en position dégagée de l'extrémité 201a de la tige 201 par rapport au retour 19.

## Revendications

1. Châssis (10) pour nacelle élévatrice (1), ledit châssis définissant un logement (15) de réception d'au moins une batterie d'accumulateurs (13), ménagé entre deux zones (16) de montage de roues (5b) de ladite nacelle disposées de part et d'autre d'un axe longitudinal médian (X-X') dudit châssis (10), **caractérisé en ce que** ledit logement (15) est apte a recevoir au moins un tiroir (14) supportant au moins une batterie d'accumulateurs (13), ledit tiroir étant déplaçable, entre une position engagée dans ledit logement et une position dégagée par rapport audit logement, par une translation (F₄) parallèle audit axe longitudinal (X-X').

2. Nacelle élévatrice à ciseaux équipée d'un moteur électrique (12) alimenté en courant à partir d'au moins une batterie d'accumulateurs (13) et comprenant un châssis (10), une plate-forme (2) et un jeu (6) de bras articulés (61) permettant de soulever plus ou moins ladite plate-forme par rapport audit châssis, **caractérisée en ce que** ledit châssis (10) est conforme à la revendication 1.

3. Nacelle selon la revendication 2, **caractérisée en ce qu'**elle comprend des moyens (20) de verrouillage dudit tiroir (14) en position engagée dans ledit logement (15).

4. Nacelle selon la revendication 3, **caractérisée en ce que** lesdits moyens de verrouillage (20) comprennent un organe (201) porté par ledit tiroir (14) et chargé élastiquement (F₂) vers une position d'engagement avec une butée (19) prévue sur ledit châssis (10).

5. Nacelle selon la revendication 4, **caractérisée en ce qu'**elle comprend des moyens (145, 146, 204) de blocage dudit organe de verrouillage (20) dans une position dégagée par rapport à ladite butée (19).

6. Nacelle selon la revendication 5, **caractérisée en ce que** lesdits moyens de blocage comprennent une plaque (145) doublant la face frontale (141) dudit tiroir (14), ladite plaque étant pourvue d'une entaille (146) en forme de L dont la plus grande branche est parallèle audit organe (201) chargé élastiquement (F₂) alors que sa plus petite branche constitue une zone de blocage d'une partie (204) desdits moyens de verrouillage (20).

7. Nacelle selon l'une des revendications 2 à 6, **caractérisée en ce que** ledit tiroir (14) porte, sur une face frontale ou externe (141), des marches ou barreaux (143) d'accès à ladite plate-forme (2).

8. Nacelle selon l'une des revendications 2 à 7, **caractérisée en ce qu'**en position basse de ladite plate-forme (2), son plancher (3) est à une hauteur (h₃) d'au plus environ 90 cm par rapport à la surface (5) sur laquelle repose ladite nacelle (1).

9. Nacelle selon l'une des revendications 2 à 8, **caractérisée en ce que** la garde au sol (g') de ladite nacelle (1) au niveau dudit logement (15) est inférieure ou égale à la garde au sol (g) au niveau d'une partie centrale (11) dudit châssis (10) définie entre deux trains de roues (5a, 5b) disposés respectivement à l'avant et à l'arrière de ladite nacelle.

10. Nacelle selon l'une des revendications 2 à 9, **caractérisée en ce que** le plancher (3) de ladite plate-forme est télescopique (F₁), ladite plate-forme étant équipée d'une rembarde (4) adaptée aux changements de dimensions dudit plancher.
